# EUROPÄISCHE PATENTANMELDUNG

(11) **EP 1 769 953 A2**
(43) Veröffentlichungstag der Anmeldung: **04.04.2007**
(21) Anmeldenummer: 06020072.2
(22) Anmeldetag: 26.09.2006
(51) Int. Cl.: B60H 1/00

(54) **Warm- und Kaltluftanlage für Omnibusse**

(30) Priorität: 01.10.2005 DE 102005047276
(71) Anmelder: MAN Nutzfahrzeuge Aktiengesellschaft, 80976 München (DE)
(72) Erfinder: Gülke, Norbert, Dr., 31139 Hildesheim (DE); Krimmling, Harald, 38126 Braunschweig (DE); Wöhlke, Volker, 38114 Braunschweig (DE); Heine, Andreas, 38176 Wendeburg (DE)

(57) **Zusammenfassung**

Eine Warm- und Kaltluftanlage für Omnibusse (12) wobei eine zentrale Klima- und Gebläseeinheit (13) im Bereich des Fahrzeugdachs (11) angeordnet ist, ist dadurch ausgezeichnet, dass die Klima- und Gebläseeinheit (13) mit einem oder mehreren entlang der Fahrzeuglängsachse vorgesehenen Dachkanälen (1) strömungstechnisch verbunden ist, die über Luftführungskanäle in den Fenstersäulen (2) mit im Bodenbereich angeordneten Luftverteilungskanälen (8) strömungstechnisch verbindbar sind. Hierdurch wird eine verbesserte Warm- und Kattluftanlage zur Verfügung gestellt, welche die Nachteile des bekannten Standes der Technik vermeidet und im Gegensatz zu diesem keine zeit- und kostenintensive Verlegung von Flüssigkeit führenden Rohren und Ventilen für Warmwasserheizungen sowie keine Konvektoren erfordert und dadurch einfach und kostengünstig in Herstellung und Montage ist. Darüber hinaus ist der Fahrgastraum schneller auf das gewünschte Temperaturniveau einstellbar. Ferner wird eine einfach nachrüstbare und für unterschiedlichste Omnibusbauarten anwendbare Lösung zur Verfügung gestellt, da die Klima- und Gebläseeinheit als Stand-alone Modul auf einen bereits vorhandenen Bus aufmontiert werden kann und die Luftführungskanäle einfach anbringbar sind. Dies gilt sowohl für Linienbusse als auch für Überlandbusse oder andersartige Sonderfahrzeuge, wie beispielsweise Busse zum Krankentransport, etc.

## Beschreibung

Die vorliegende Erfindung betrifft eine Warm- und Kaltluftanlage für Omnibusse, wobei eine zentrale Klima- und Gebläseeinheit im Bereich des Fahrzeugdachs angeordnet ist.

Bei Omnibussen werden zur Klimatisierung des Fahrgastraums im allgemeinen beheizte Seitenwandkonvektoren und Aufdachklimaanlagen eingesetzt. Als Ergänzung und zur Verstärkung der Heizleistung im Winter werden gebläseunterstützte Seitenwandkonvektoren und auch beheizte oder elektrisch betriebene Heizer in Einstiegen und zur Montage unter einzelnen Fahrgastsitzen angeboten. Die Montage der beschriebenen Einrichtungen im Fahrzeug ist meist sehr aufwändig, da alle Verbindungen dauerhaft wasserdicht und vibrationsfrei verlegt sein müssen. Ergänzend muss eine zusätzliche Rohrisolation zur Verhinderung von Wärmeverlusten und Korrosion montiert werden, dies insbesondere für die normalerweise im unteren Bereich des Fahrgastraums installierten Seitenwandheizer. Dies kann zu hohen Montage- und Wartungskosten führen. Hinzu kommt der Platzbedarf im Fußraum, der meist sehr störend für sitzende und stehende Fahrgäste ist und den Komfort einschränkt. Auch kann der Mindestfreiraum für Rollstuhlfahrer eingeschränkt sein. Die Anordnung erfordert Varianten bei unterschiedlicher Ausführung des Fahrgastraums. Die Verrohrung stellt speziell bei Niederflurbussen aufgrund des geringen Platzangebots ein Problem dar.

Aus dem Stand der Technik sind weitere Lösungsansätze bekannt, die nachfolgend kurz beschrieben werden.

So wird in der DD 10230 eine Beheizung des Karosserieraums von Kraftfahrzeugen mittels durch Wärmetauscher erwärmte Frischluft beschrieben. Hierbei wird die gesamte Bodenfläche des Wageninnenraums durch über den Boden verteilte Kanäle beheizt, durch die erwärmte Frischluft hindurchgeführt wird. Darüber hinaus ist vorgesehen, dass erwärmte Frischluft nach dem Durchstreichen der Bodenkanäle ganz oder teilweise in das Wageninnere ausgeblasen wird. Eine Klimatisierung bzw. Kühlung des Fahrgastraums ist hier nicht vorgesehen.

Die DE 4333 578 C2 offenbart eine kombinierte Warmluft- und Flächenheizung eines Omnibusses, bei dem mindestens dessen tragende Wand eine doppelwandige Struktur aufweist, mit mindestens einer längs der tragenden Wand des Omnibusses angeordneten wärmeabstrahlenden Heizfläche und mit Heizluft, die von einer Gebläseeinrichtung entlang der Heizfläche und in den Innenraum des Omnibusses geführt ist, wobei die wärmeabstrahlende Heizfläche die dem Innenraum des Omnibusses zugewandte Innenfläche der tragenden Wand des Omnibusses ist und unmittelbar ihre Wärme durch Strahlung und Konvektion an den Innenraum des Omnibusses abgibt und von der Heizluft durch konvektiven Wärmeaustausch beheizt wird. Auch hier ist eine Klimatisierung bzw. Kühlung des Innenraums nicht vorgesehen.

Ferner beschreibt die DE 3940 400 C2, dass bei bekannten Systemen die Heizeinrichtungen und die Belüftungseinrichtungen gesonderte Einheiten sind, die an verschiedenen Stellen längs des Omnibusses an dessen gemeinsamen Dachkanal angeschlossen sind. Eine weitere zusätzliche Heizereinrichtung ist separat von der ersten Heizeinrichtung im Unterboden angeordnet und dient außerdem zur Beheizung eines Fußkanals. Aus den unterschiedlichen Einleitungsstellen von Außenluft und Umluft in den als Verteilerkanal dienenden Dachkanal, rührt ein relativ großes thermisches Gefälle der aus dem Dachkanal in den Innenraum des Omnibusses austretenden Klimatisierungsluft her, zumal an Einleitungsstellen der Außenluft sogar eine direkte Beaufschlagung der unterhalb der Einleitung befindlichen Sitze von oben her mit Außenluft erfolgt. Um diesen Effekt zu mildern, ist bei dem bekannten System der Belüftungseinrichtung ein zusätzlicher Wärmetauscher vorgesehen, der über ein Regelventil eine Vorklimatisierung des Außenluftstroms auf etwa 30 Grad Celsius bewirkt und dadurch ungute Gefühle der direkt vom Außenluftstroms beaufschlagten Omnibusseinsassen verhüten soll. Dieser zusätzliche Wärmetauscher ist bei Temperaturen unterhalb der Innenraumtemperatur des Omnibusses zugeschaltet und sonst, wie auch im Kühlbetrieb ausgeschaltet. Durch die Kombination mehrerer separater Heiz- und Luftführungssysteme ist diese Lösung sehr aufwändig und teuer.

Schließlich beschreibt die DE 9007 782 U1 eine biegesteife Seitenwand für Wagenkörper, insbesondere von schnell fahrenden Reisezugwagen. Dabei weist das aus Seitenwandsäulen und horizontal zwischen ihnen angeordneten Profilen bestehende Seitenwandgerippe teilweise Kanäle zur Führung der Luft aus einer Klimaanlage auf. Bei einer Seitenwand für einen klimatisierten Reisezugwagen, bei dem Luft in den Bereich des oberen Drittels der Fenster geführt wird, sind lediglich die zwischen den Fensteröffnungen im Blindfeld liegenden Seitenwandsäulen des Gerippes mit vergrößerter Profilhöhe ausgeführt. Außer diesen Seitenwandsäulen können aber auch die Fenstersäulen, die unterhalb der Fenster angeordneten Halbsäulen sowie die über den Fenstern und die im Bereich zwischen Seitenwandsäulen horizontal verlaufenen Profile mit vergrößerter Profilhöhe ausgeführt sein. Dies dient insbesondere dazu, Luft einer Klimaanlage im Bereich unterhalb der Fenster und ggf. im Bereich des oberen Drittels der Fenster zu führen. Im oberen Drittel der Fenster wird die Luft um 90 Grad umgelenkt und strömt in Richtung auf die Fenster aus. Eine Differenzierung zwischen Heiz- und Klimabetrieb ist hier nicht vorgesehen.

Während ein großer Teil des Standes der Technik sich ausschließlich mit dem Beheizen des Fahrgastraums beschäftigt, wobei hier in erster Linie Beheizung durch Konvektionsheizflächen beschrieben wird, werden in anderen Patentdokumenten zwar auch mögliche Klimatisierungseinrichtungen beschrieben, hier jedoch eine komplizierte und undifferenzierte Luftführung für Beheizung und Klimatisierung angegeben.

Es ist daher die Aufgabe der vorliegenden Erfindung, eine verbesserte Warm- und Kaltluftanlage zur Verfügung zu stellen, welche die Nachteile des bekannten Standes der Technik vermeidet und im Gegensatz zu diesem keine Verlegung von Flüssigkeit führenden Rohren erfordert und dadurch einfach und kostengünstig in Herstellung und Montage ist. Ferner soll eine einfach nachrüstbare und für unterschiedlichste Omnibusbauarten anwendbare Lösung zur Verfügung gestellt werden.

Diese Aufgabe wird erfindungsgemäß durch eine Warm- und Kaltluftanlage für Omnibusse mit den Merkmalen des Patentanspruchs 1 gelöst. Vorteilhafte Weiterbildungen der Erfindung sind in den abhängigen Ansprüchen angegeben.

Eine erfindungsgemäße Warm- und Kaltluftanlage für Omnibusse, wobei eine zentrale Klima- und Gebläseeinheit im Bereich des Fahrzeugdachs angeordnet ist, sieht vor, dass die Klima- und Gebläseeinheit mit einem oder mehreren entlang der Fahrzeuglängsachse vorgesehenen Dachkanälen strömungstechnisch verbunden ist, die über Luftführungskanäle in den Fenstersäulen mit im Bodenbereich angeordneten Luftverteilungskanälen strömungstechnisch verbindbar sind. Dabei kann die Klima- und Gebläseeinheit auf oder im Dach angeordnet sein. Auch die Dachkanäle, von denen in der Regel zumindest ein Dachkanal auf der linken Fahrzeugseite und ein Dachkanal auf der rechten Fahrzeugseite vorgesehen sind, können auf dem Dach oder im Dach, d.h. im Fahrzeuginnenraum angeordnet sein. Durch die strömungstechnische Verbindung zwischen Klima- und Gebläseeinheit werden die Dachkanäle je nach Betriebsart immer mit temperierter Luft durchströmt. Im Heizbetrieb, d.h. bei Durchströmung der Dachkanäle mit erwärmter Luft, werden Ventile oder andere geeignete Steuerorgane zu den Luftkanälen in den Fenstersäulen geöffnet und die erwärmte Luft gelangt so in die im Bodenbereich angeordneten Luftführungskanäle, wo sie durch entsprechende, beispielsweise als Luftverteildüsen ausgebildete Ausströmöffnungen ins Fahrzeuginnere ausströmen kann. Dabei können die Fenstersäulen entweder unmittelbar oder durch ein separat eingefügtes Rohr als Lufttransportleitung dienen. Im Klimabetrieb, d.h. beim Durchströmen der Dachkanäle mit gekühlter Luft, bleiben die Ventile zu den Luftkanälen in den Fenstersäulen geschlossen und die gekühlte Luft tritt über Austrittsöffnungen in den Dachkanälen aus. Dies kann beispielsweise durch die Innendecke erfolgen.

Hierdurch wird eine verbesserte Warm- und Kaltluftanlage zur Verfügung gestellt, welche die Nachteile des bekannten Standes der Technik vermeidet und im Gegensatz zu diesem keine zeit- und kostenintensive Verlegung von Flüssigkeit führenden Rohren und Ventilen für Warmwasserheizungen sowie keine Konvektoren erfordert und dadurch einfach und kostengünstig in Herstellung und Montage ist. Darüber hinaus ist der Fahrgastraum schneller auf das gewünschte Temperaturniveau einstellbar. Ferner wird eine einfach nachrüstbare und für unterschiedlichste Omnibusbauarten anwendbare Lösung zur Verfügung gestellt, da die Klima- und Gebläseeinheit als Stand-alone Modul auf einen bereits vorhandenen Bus aufmontiert werden kann und die Luftführungskanäle einfach anbringbar sind. Dies gilt sowohl für Linienbusse als auch für Überlandbusse oder andersartige Sonderfahrzeuge, wie beispielsweise Busse zum Krankentransport, etc.

Eine vorteilhafte Ausführungsform der Erfindung sieht vor, dass in den Dachkanälen Verschlusseinrichtungen zum Steuern der Luftführung vorgesehen sind. Diese Verschlusseinrichtungen zum Steuern der Luft in den Dachkanälen öffnen oder schließen die Verbindung zwischen den Dachkanälen und den Luftkanälen in den Fenstersäulen und öffnen oder schließen die Ausströmöffnungen für die durchströmende Luft in den Fahrzeuginnenraum. Je nach Ausgestaltung der Einrichtungen können diese auch teilweise geöffnet werden.

Dabei hat sich als eine besonders vorteilhafte Ausführungsform der Erfindung gezeigt, dass die Dachkanäle aus Metallblech und/oder Kunststoff hergestellt sind. Dabei haben Kunststoffkanäle den Vorteil, dass sie korrosionsbeständig sind und i. d. R. nicht gegen Kondenswasser gesondert geschützt werden müssen. Allerdings muss bei der Auswahl der Kunststoffmaterialien auf eine entsprechende Temperaturbeständigkeit geachtet werden, damit sie zum Führen von Heizluft geeignet sind. Je nach Bauweise und Baulänge können hier entsprechende Faserverstärkungen zur Anwendung kommen. Bei beiden Bauarten, d.h. sowohl bei den Dachkanälen aus Metall, als auch bei den Dachkanälen aus Kunststoff lassen sich entsprechende Dämmmaterialien, wie beispielsweise PU-Schaum anbringen, um Wärme- bzw. Kälteverluste von der Klima- und Gebläseeinheit bis zu den jeweiligen Ausströmöffnungen zu minimieren.

Eine besonders vorteilhafte Ausführungsform der Erfindung sieht vor, dass geschlitzte Blenden im Dachkanal als Verschlusseinrichtung zum Steuern der Luftführung vorgesehen sind, um durch Verschieben der Blenden Luftschlitze zu öffnen, zu schließen oder teilweise zu öffnen bzw. teilweise zu schließen. Gegebenenfalls ist hierbei die Verwendung mehrerer Schlitzblenden übereinander erforderlich, um einerseits die gewünschten Öffnungszustände der Verbindungen zwischen den Dachkanälen und den Luftkanälen in den Fenstersäulen zu erzielen und andererseits die Luftaustrittsöffnungen der Dachkanäle direkt in den Fahrzeuginnenraum unabhängig hiervon in gewünschter Weise zu öffnen, teilweise zu öffnen oder zu schließen.

Eine vorteilhafte Ausführungsform der Erfindung sieht vor, dass die geschlitzten Blenden aus Metall- und/oder Kunststoff hergestellt sind. Dabei spielt hier das dichtende Zusammenwirken mit den in den Dachkanälen vorgesehenen Gleitbahnen eine wichtige Rolle. Die Schlitze sind dabei so ausgelegt, dass sie kongruent über entsprechenden Öffnungen im Dachkanal zu liegen kommen können, wodurch eine entsprechende Ausströmöffnung freigegeben wird. Alternativ zu Schlitzen können aber auch alle anderen geeigneten Geometrien, wie beispielsweise Lochmuster, etc. zur Anwendung kommen. Sofern die Blenden aus Metall hergestellt sind, können diese kunststoffbeschichtet sein, um die Gleit- und Dichteigenschaften zu verbessern. Alternativ können auch andere geeignete Verschluss- und Ventilelemente zur Anwendung kommen.

Eine vorteilhafte Ausführungsform der Erfindung sieht vor, dass pneumatische, elektrische oder hydraulische Aktuatoren zum Verschieben der geschlitzten Blenden vorgesehen sind. Alternativ kann die Bedienung auch manuell über ein Gestänge erfolgen. Die Blenden können beispielsweise an einem Stück über die gesamte Länge eines Dachkanals oder separaten und einzeln ansteuerbar ausgelegt sein. In letzterem Fall bieten sich insbesondere elektrische Aktuatoren an, die dann lediglich eine elektrische Leitung zur Ansteuerung benötigen.

Eine vorteilhafte Ausführungsform der Erfindung sieht vor, dass separate Einrichtungen zur Luftmengensteuerung jeweils am rechten und am linken Dachkanal vorgesehen sind, so dass die Dachkanäle mit unterschiedlichen Luftmengen beaufschlagbar sind. Dies hat den praktischen Vorteil, dass beispielsweise bei Linienbussen der Dachkanal im Einstiegsbereich mit einer anders temperierten Luft beaufschlagt wird als der Dachkanal am gegenüberliegenden Fensterbereich. Eine Luftmengensteuerung kann beispielsweise durch drehzahlgeregelte Gebläselüfter im Dachbereich erfolgen, wobei hier beispielsweise ein Gebläselüfter pro Dachkanal vorgesehen sein kann.

Eine vorteilhafte Ausführungsform der Erfindung sieht ferner vor, dass eine Regelungseinrichtung zur Luftmengen- und Temperaturregelung vorgesehen ist. Dies kann eine vorteilhafte Erweiterung der Luftmengensteuerung sein, die über einen FeedBack Loop, d.h. einen geschlossenen Regelkreis die Soll- mit der Ist-Temperatur an mehreren Stellen vergleicht und auf das gewünschte Niveau regelt.

Eine vorteilhafte Ausführungsform der Erfindung sieht vor, dass an den im Bodenbereich angeordneten Luftverteilungskanälen Einstelleinrichtungen zum abschnittsweisen manuellen Einstellen der Ausströmmenge vorgesehen sind. Dies können beispielsweise manuell betätigbare Blenden aus Kunststoff oder Metall sein, die Innenraumseitig an den Ausströmöffnungen angebracht sind, oder aber aufwändigere fernsteuerbare Verschlusselemente, die beispielsweise über ein elektrisches Bedienfeld an jedem Sitzplatz vom jeweiligen Fahrgast nach seinen individuellen Wünschen angesteuert werden können.

Noch eine vorteilhafte Ausführungsform der Erfindung sieht vor, dass an den Fenstersäulen Ausströmöffnungen zum Ausströmen von temperierter Luft vorgesehen sind. Dies können beispielsweise Luftschlitze sein, die ggf. manuell nach den individuellen Bedürfnissen der Fahrgäste einstellbar sind. Insbesondere bei Überlandreisen kann der Bedarf an gekühlter Luft auf der sonnenbeschienenen Seite des Busses deutlich größer sein als auf der der Sonne abgewandten Seite.

Schließlich sieht eine vorteilhafte Ausführungsform der Erfindung vor, dass Temperaturfühler über den Fahrgastraum verteilt angeordnet sind. Diese Sensoren dienen zur Übermittlung eines Feedback-Signals bzw. Rückkopplungssignals an die Temperaturregelung und können auf unterschiedlichen Seiten des Omnibusses und im vorderen, mittleren und hinteren Bereich des Busses angeordnet sein.

Nachfolgend wird eine vorteilhafte Ausführungsform der vorliegenden Erfindung zusammen mit der Beschreibung der schematischen Figuren beispielhaft beschrieben. Es zeigen:
- Fig. 1: einen ersten Betriebszustand der erfindungsgemäßen Warm- und Kaltluftanlage für Omnibusse, bei dem Warmluft in den Fußraum des Fahrgastbereichs geleitet wird;
- Fig. 2: eine Aufsicht im Schnitt durch einen Dachkanal der entsprechenden Warm- und Kaltluftanlage für Omnibusse aus Figur 1;
- Fig. 3: einen zweiten Betriebszustand der erfindungsgemäßen Warm- und Kaltluftanlage für Omnibusse, bei dem Kaltluft aus Ausströmern im Dachkanal in den Fahrgastraum ausströmt;
- Fig. 4: eine Aufsicht im Schnitt durch einen Dachkanal der entsprechenden Warm- und Kaltluftanlage für Omnibusse aus Figur 3;
- Fig. 5: eine schematische Seitenansicht eines Omnibusses mit einer auf dem Fahrzeugdach montierten Klima- und Gebläseeinheit.

Bei den Figuren handelt es sich lediglich um beispielhafte schematische Darstellungen. Die Richtungsangaben beziehen sich auf die Fahrzeugfahrtrichtung soweit nicht anders angegeben.

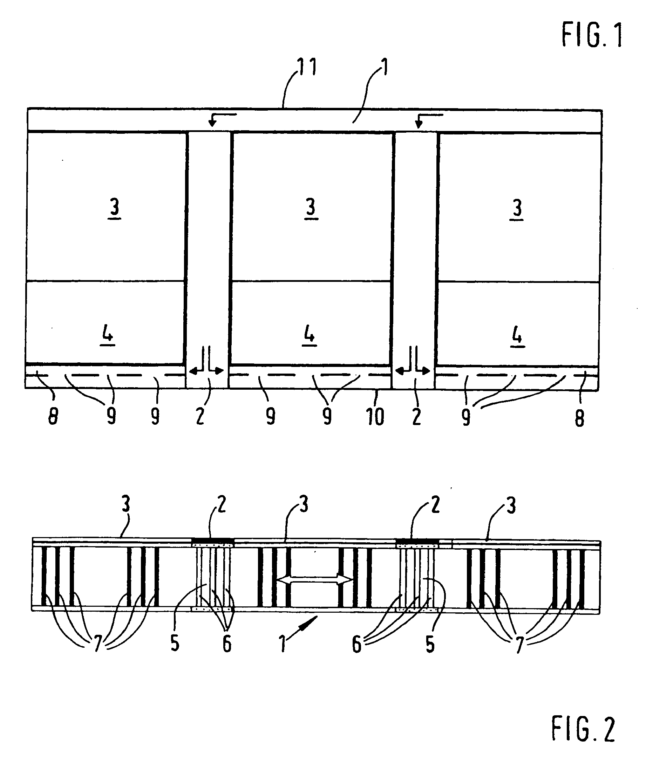

Figur 1 zeigt eine beispielhafte Ausführungsform einer erfindungsgemäßen Warm- und Kaltluftanlage für Omnibusse in einer schematischen Seitenansicht von Innen in einem ersten Betriebszustand, bei der Warmluft in den Fußraum des Fahrgastbereichs geleitet wird. Figur 2 zeigt eine schematische Aufsicht im Schnitt durch einen Dachkanal der entsprechenden Warm- und Kaltluftanlage aus Figur 1.

Dabei ist ein Dachkanal 1 aus glasfaserverstärktem Kunststoff für den Warm- und Kaltlufttransport im Fahrgastraum eines Omnibusses vorgesehen. Unterhalb des Dachkanals 1 sind mit diesem verbundene vertikale Fenstersäulen 2 mit integriertem widerstandsarm gestalteten Luftkanal 5 vorgesehen. Die Seitenverglasung 3 ist zwischen dem Dachkanal 1 und den Fenstersäulen 2 sowie an der Unterseite von der Innenverkleidung 4 aufgenommen.

Die Luftkanäle 5, die sich in den Fenstersäulen 2 befinden, sind gegenüber dem Dachkanal 1 durch als längsverschiebbare Schlitzblenden ausgebildete Verschlusseinrichtungen 6 absperrbar. Die Schlitzblenden sind dabei aus teflonbeschichtetem Metallblech hergestellt und erstrecken sich über die gesamte Kanalläge. Sie sind verschiebbar in Gleitschienen gelagert und stehen mit ihren Schlitzen entweder kongruent über im Dachkanal vorgesehene Offnungsschlitze oder verschließen diese luftdicht mit ihrem geschlossenen Bereich. Durch Aktuatoren werden sie entsprechend verschoben. Die in Figur 2 dargestellten Luftausströmer 7 sind in dem in Figur 1 und Figur 2 dargestellten Heizbetrieb geschlossen.

Wie in den Darstellungen gemäß Figur 1 und Figur 2 gezeigt, erfolgt die Beheizung des Fahrgastraums durch geeignete Zuführung von erwärmter Luft von auf dem Fahrzeugdach befindlichen Klimatisierung- und Heizungseinrichtungen. Dazu werden im Fahrzeugdach 11 integrierte Dachkanäle 1 für den Transport von Warm- und Kaltluft so ausgestaltet, dass eine möglichst widerstandsfreie Strömung erreicht wird. Die in jedem Omnibus vorhandene Fenstersäulen 2, als Teil der tragenden Gerippestruktur, oder deren Verkleidung werden so ausgelegt, dass sie wechselweise zum Transport der erwärmten oder gekühlten Luft dienen.

In Figuren 1 und 2 wird anhand eines vorteilhaften Ausführungsbeispiels der Lufttransport bis in den Fußraum des Fahrgastbereichs ausgehend vom Dachkanal 1 nach unten durch die Fenstersäulen 2 bzw. deren Verkleidung und von dort in die in der Seitenverkleidung integrierten Luftverteilungskanäle 8 mit Offnungsschlitzen 9 schematisch dargestellt. Die Luftströmung ist dabei in Figur 1 durch entsprechende Pfeile angedeutet. Die Pfeile in Figur 2 deuten die Verschiebewege der als Schlitzblende ausgebildeten Verschlusseinrichtung 6 an.

Insbesondere Warmluft muss im Fußraum des Fahrgastbereichs ausströmen, hierzu wird die Warmluft durch die entsprechend der Erfindung ausgelegten Fenstersäulen 2 bzw. deren Verkleidung nach unten geleitet. Der Luftaustritt erfolgt unmittelbar über dem Fußboden 10. An diesen Austritten können Luftkanäle 8 angeschlossen werden, die in Fahrzeuglängsrichtung angeordnet sind. Die Luftverteilungskanäle 8 haben ihrerseits entsprechend der notwendigen Warmluftmenge ausgelegte Öffnungen 9, die die Warmluft im Fußraum des Fahrgastraums ausströmen lassen. Lediglich eine Teilluftmenge wird direkt vom Dachkanal 1 über Luftausströmer 7 in den Fahrgastraum geblasen, zum Beispiel zum Beschlagfreihalten der Scheiben 3.

Die Warm- und Kaltluft wird durch geeignete (nicht gezeigte) drehzahlgeregelte Gebläselüfter im Dachbereich des Fahrzeugs in die strömungsgünstig ausgestalteten, widerstandsarmen Kanäle geleitet. Dabei ist jeweils ein Gebläselüfter pro Dachkanal 1 vorgesehen, d.h. im vorliegenden Ausführungsbeispiel sind zwei Gebläselüfter vorhanden. Die Auslegung der Gebläseleistung sorgt für ausreichende Luftmengen an allen Ausströmöffnungen. Neben den Gebläselüftern ist im Dachbereich noch eine Klimaeinheit angeordnet.

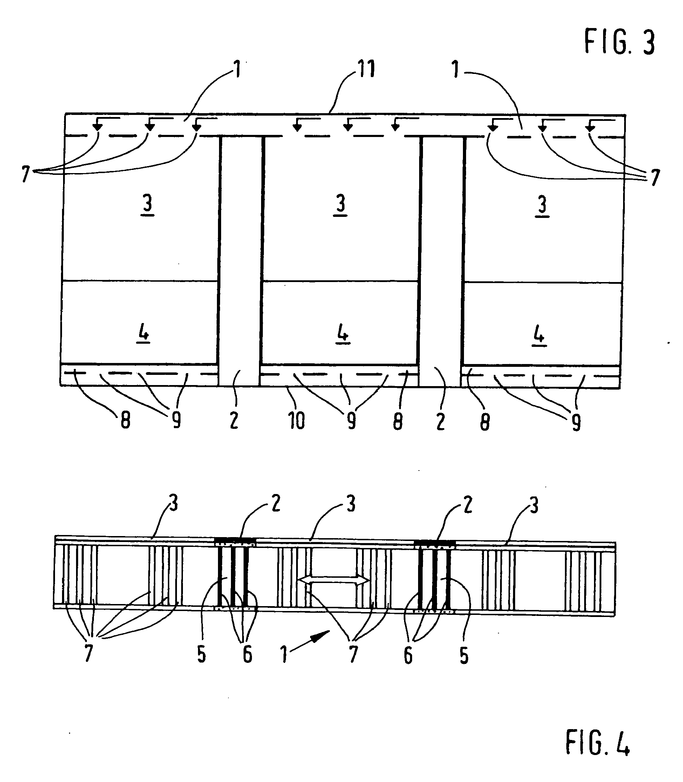

Figuren 3 und 4 zeigen anhand eines vorteilhaften Ausführungsbeispiels den Lufttransport in einem zweiten Betriebszustand, nämlich im Klima- bzw. Kühlbetrieb. Die Luftströmung ist dabei in Figur 3 durch entsprechende Pfeile angedeutet. Die Dachkanäle 1 sind nämlich auch für den Transport von gekühlter Luft ausgelegt, die im Gegensatz zu der Warmluftströmung im oberen Bereich des Fahrgastraums ausströmen soll, damit eine ordnungsgemäße Klimatisierung bzw. Kühlung des Fahrgastraums erreicht wird. Hierzu muss ein Luftaustritt von gekühlter Luft im Fußbereich verhindert werden.

Der Verschluss der Ausströmöffnungen 7 im Dachkanal 1 oberhalb der Seitenverglasung 3 und die Öffnung des Weges zu den vertikalen Fenstersäulen 2 für den Warmlufttransport in den Fußraum sowie andererseits der Verschluss des Weges zu den Fenstersäulen 2 und Öffnung der Ausströmschlitze 7 im Dachkanal 1 erfolgt durch eine in Fahrzeuglängsachse im Dachkanal 1 integrierte als Schlitzblende ausgebildete Verschlusseinrichtung 6, die je nach gewünschter Klimatisierung eingestellt wird.

Der Antrieb kann mit unterschiedlichen Stelleinrichtungen, beispielsweise elektrisch, pneumatisch, hydraulisch o.ä. erfolgen. Im vorliegenden Ausführungsbeispiel wird der Stellantrieb auf kostengünstige Weise durch elektrische Verstellmagnete als Aktuatoren realisiert, da hier nur zwei Verstellpositionen, d.h. geschlossen und offen, vorgesehen sind. Der Verschiebeweg der Verschlusseinrichtung ist in Figur 4 durch Pfeile angedeutet. Die Ansteuerung zur Verstellung erfolgt durch ein Klimasteuergerät, das auch die stufenlose Regulierung der Warm- und Kaltluftmenge in Abhängigkeit von der gewünschten Innentemperatur steuert.

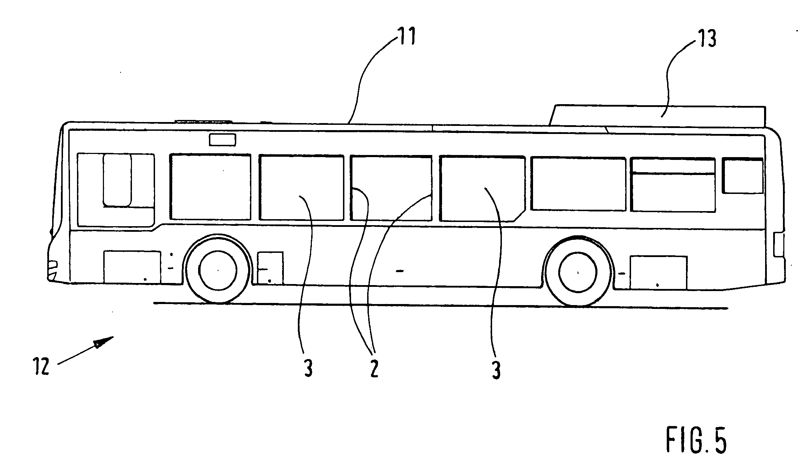

Figur 5 zeigt eine schematische Seitenansicht eines Omnibusses 12 mit einer im Bereich des Fahrzeugdachs 11 montierten Klima- und Gebläseeinheit 13. Die Klima- und Gebläseeinheit 13 ist dabei auf dem Fahrzeugdach 11 montiert und strömungstechnisch mit den (nicht dargestellten) im Inneren des Busses 12 verlaufenden Dachkanälen verbunden. Dabei verlaufen die Dachkanäle oberhalb der Seitenverglasung 3 und sind strömungstechnisch mit in den Fenstersäulen 3 angeordneten Luftkanälen verbindbar.

### Bezugszeichenliste

- 1: Dachkanal
- 2: Fenstersäule
- 3: Seitenverglasung
- 4: Innenverkleidung
- 5: Luftkanal
- 6: Verschlusseinrichtung
- 7: Luftausströmer
- 8: Luftverteilungskanal
- 9: Öffnungsschlitze
- 10: Fußboden
- 11: Fahrzeugdach
- 12: Omnibus
- 13: Klima- und Gebläseeinheit

## Patentansprüche

1. Warm- und Kaltluftanlage für Omnibusse (12), wobei eine zentrale Klima- und Gebläseeinheit (13) im Bereich des Fahrzeugdachs (11) angeordnet ist, **dadurch gekennzeichnet, dass** die Klima- und Gebläseeinheit (13) mit einem oder mehreren entlang der Fahrzeuglängsachse vorgesehenen Dachkanälen (1) strömungstechnisch verbunden ist, die über Luftführungskanäle in den Fenstersäulen (2) mit im Bodenbereich angeordneten Luftverteilungskanälen (8) strömungstechnisch verbindbar sind.

2. Warm- und Kaltluftanlage für Omnibusse nach Patentanspruch 1, **dadurch gekennzeichnet, dass** in den Dachkanälen (1) Verschlusseinrichtungen (6) zum Steuern der Luftführung vorgesehen sind.

3. Warm- und Kaltluftanlage für Omnibusse nach Patentanspruch 2, **dadurch gekennzeichnet, dass** die Dachkanäle (1) aus Metallblech und/oder Kunststoff hergestellt sind.

4. Warm- und Kaltluftanlage für Omnibusse nach Patentanspruch 2, **dadurch gekennzeichnet, dass** geschlitzte Blenden im Dachkanal (1) als Verschlusseinrichtung (6) zum Steuern der Luftführung vorgesehen sind, um durch Verschieben der Blenden Luftschlitze zu öffnen, zu schließen oder teilweise zu öffnen bzw. teilweise zu schließen.

5. Warm- und Kaltluftanlage für Omnibusse nach Patentanspruch 1, **dadurch gekennzeichnet, dass** die geschlitzten Blenden aus Metall- und/oder Kunststoff hergestellt sind.

6. Warm- und Kaltluftanlage für Omnibusse nach Patentanspruch 4, **dadurch gekennzeichnet, dass** pneumatische, elektrische oder hydraulische Aktuatoren zum Verschieben der geschlitzten Blenden vorgesehen sind.

7. Warm- und Kaltluftanlage für Omnibusse nach Patentanspruch 1, **dadurch gekennzeichnet, dass** separate Einrichtungen zur Luftmengensteuerung jeweils am rechten und am linken Dachkanal (1) vorgesehen sind, so dass die Dachkanäle mit unterschiedlichen Luftmengen beaufschlagbar sind.

8. Warm- und Kaltluftanlage für Omnibusse nach Patentanspruch 1, **dadurch gekennzeichnet, dass** eine Regelungseinrichtung zur Luftmengen- und Temperaturregelung vorgesehen ist.

9. Warm- und Kaltluftanlage für Omnibusse nach Patentanspruch 1, **dadurch gekennzeichnet, dass** an den im Bodenbereich angeordneten Luftverteilungskanälen Einstelleinrichtungen zum abschnittsweisen manuellen Einstellen der Ausströmmenge vorgesehen sind.

10. Warm- und Kaltluftanlage für Omnibusse nach Patentanspruch 1, **dadurch gekennzeichnet, dass** an den Fenstersäulen Ausströmöffnungen zum Ausströmen von temperierter Luft vorgesehen sind.

11. Warm- und Kaltluftanlage für Omnibusse nach Patentanspruch 1, **dadurch gekennzeichnet, dass** Temperaturfühler über dem Fahrgastraum verteilt angeordnet sind.
